(19) Europäisches Patentamt

European Patent Office

Office européen des brevets

(11) **EP 0 822 442 B1**

(12) **EUROPEAN PATENT SPECIFICATION**

(45) Date of publication and mention
of the grant of the patent:
**15.01.2003 Bulletin 2003/03**

(51) Int Cl.⁷: $G03B\ 17/36$, $G03B\ 17/18$, $G03B\ 17/42$

(21) Application number: **97203178.5**

(22) Date of filing: **25.08.1989**

(54) **Photographic camera systems and film cassettes**

Photographische Kamerasysteme und Filmpatronen

Systèmes d'appareil photographiques et cartouches de film photographique

(84) Designated Contracting States:
**DE FR GB**

(30) Priority: **31.08.1988 JP 21782588**
**31.08.1988 JP 21782688**
**02.09.1988 JP 21974088**

(43) Date of publication of application:
**04.02.1998 Bulletin 1998/06**

(62) Document number(s) of the earlier application(s) in
accordance with Art. 76 EPC:
**96116287.2 / 0 764 873**
**96110972.5 / 0 738 914**

(73) Proprietor: **SONY CORPORATION**
**Tokyo 141 (JP)**

(72) Inventor: **Murakami, Susumu,**
**c/o Patents Div.,Sony Corp.**
**Shinagawa-ku, Tokyo 141 (JP)**

(74) Representative: **DeVile, Jonathan Mark, Dr. et al**
**D. Young & Co.,**
**21 New Fetter Lane**
**London EC4A 1DA (GB)**

(56) References cited:
**GB-A- 2 084 746     US-A- 3 678 834**
**US-A- 4 146 321     US-A- 4 401 376**
**US-A- 4 701 046     US-A- 4 705 372**

## Description

This invention relates to photographic camera systems and to film cassettes.

US patent specification US-A-4 780 735 proposes that the effective photographic area on the film can be increased by recording magnification control data for the printing equipment in an area between the frames. Close-up photography is in effect achieved without requiring an expensive zoom lens by limiting the photographic area of the film. On printing this limited area, the magnification is increased so that an apparent close-up is effected whilst utilizing a standard lens. US-A-4 780 735 also discloses a technique in which a 17-bit code, namely, control information for the magnification, date information, and the like is recorded in the blank area between successive frames.

One problem with this, however, is that if slide film is used, the area between the frames is covered when a slide support frame is attached to the frame after development. If the film used is a negative film, then the film has to be kept un-cut to avoid losing the data.

US 4 401 376 A discloses a 35 mm film devoid of sprocket holes for increasing the effectively usable image frame area to 33x44 mm$^2$ and to control the film transport by optical detection of small holes in the edge region of the film. US 4 146 321 A discloses the use of different aperture masks in a camera using 35 mm film without sprocket holes in order to produce image frames of different sizes and aspect ratios.

According to the invention there is provided a photographic camera, according to claim 1.

The invention will now be described by way of example with reference to the accompanying drawings, throughout which like parts are referred to by like references, and in which:

Figure 1 is a plan view of a portion of a 35mm wide photographic film;

Figure 2 is a plan view of another 35mm wide photographic film;

Figure 3 is a plan view in partial cross-section of an embodiment of camera according to the present invention;

Figure 4 is a rear elevational view of the camera of Figure 3 with the rear cover removed;

Figure 5 is a perspective view of a film transporting mechanism and detecting mechanism in the camera of Figure 3;

Figure 6 is an exploded perspective view showing the detecting mechanism of Figure 5 in more detail;

Figure 7 is an enlarged, cross-sectional view on line 7-7 in Figure 4 with film loaded in the camera;

Figure 8 is a front elevational view of an example of a film pressure plate used in the camera of Figure 3;

Figure 9 is a block diagram of an example of the film transporting system used in the camera of Figure 3;

Figure 10 is a schematic diagram of an example of a film transport detecting circuit used in the film transporting system of Figure 9;

Figures 11A to 11D are waveform diagrams of signals present in the operation of the film transport detecting circuit of Figure 10;

Figure 12 is a rear elevational view of another example of film transport detecting mechanism;

Figure 13 is an enlarged, cross-sectional view on line 13-13 in Figure 12;

Figure 14 is a front elevational view of another example of film pressure plate;

Figures 15A and 15B are elevational views of a data recording system;

Figure 16 is a plan view of a portion of film in which photographic data are recorded;

Figures 17A to 17G and 17H are, respectively, schematic diagrams showing examples of various recorded data, and numerals and characters used to record the data;

Figures 18A to 18D are plan views of a portion of film in which the minimum detection value of a film transport amount is 5.25mm;

Figures 19A to 19D are plan views of a portion of film in which the minimum detection value of the film transport amount is 6.28mm;

Figure 20A is a plan view of a portion of a 35mm wide photographic film having perforations, in which the minimum detection value of the film transport amount is 5.25mm; and

Figure 20B is a plan view of a portion of a 35mm photographic film having perforations, in which the minimum detection value of the film transport amount is 6.28mm.

A known 35mm photographic film will first be considered, then it will be explained how to increase the effective photographic area of film in its widthwise direction by eliminating the perforations. The manner in which the flatness of the film is maintained by using the portions outside the effective photographic area thereof will be considered next. Then the problem of how to transport the film accurately by a predetermined pitch, even although the perforations are absent, will be discussed. Lastly, how to make effective use of the film outside the effective photographic area by the elimination of the perforations will be explained.

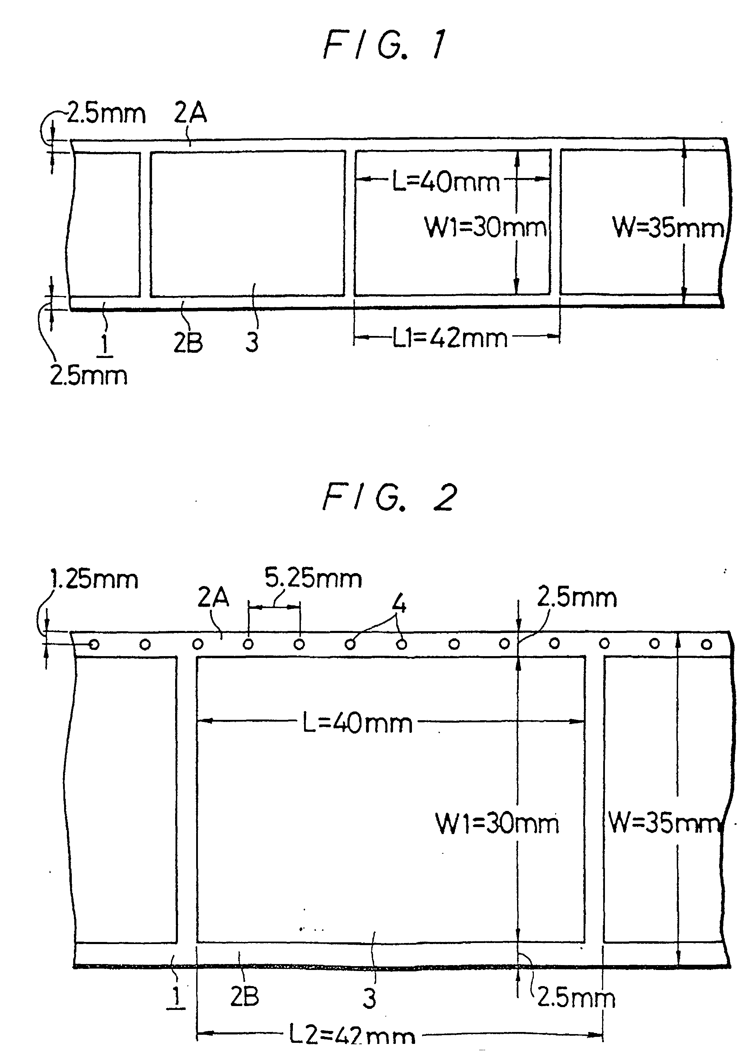

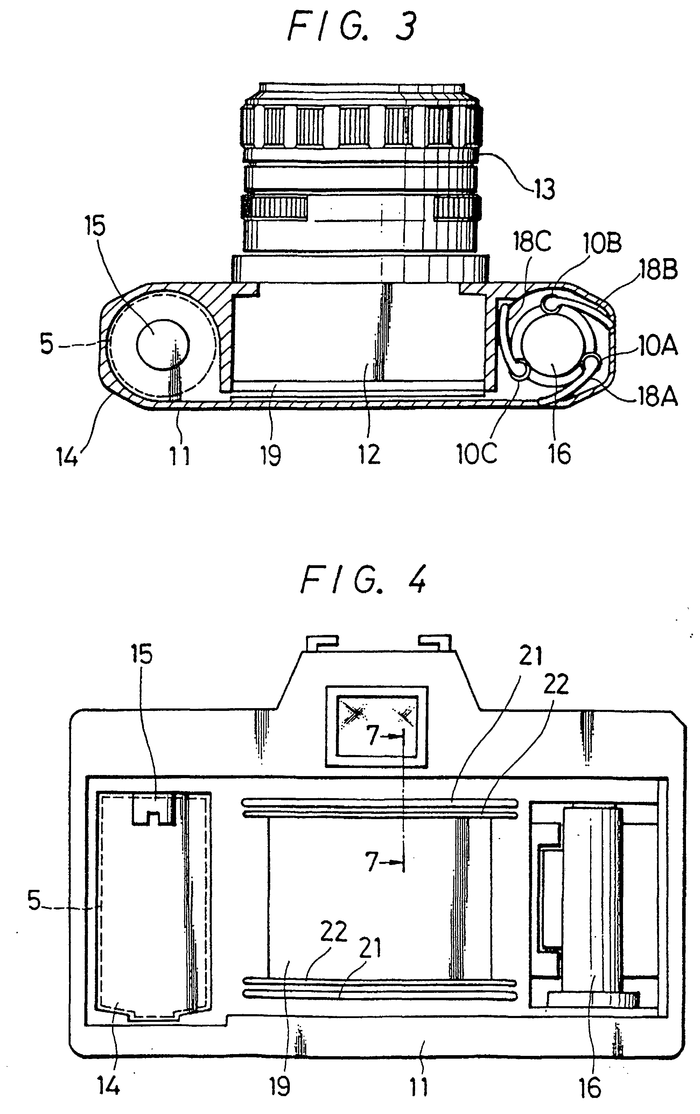

In Figure 1, a photographic film 1 has a width the same as commercially available photographic film, namely 35mm, but is not provided with perforations. A frame 3 in the film 1 defines an effective photographic area whose effective width W1 in the film-width direction is selected to be 30mm, and whose effective length L in the lengthwise or film-transporting direction of the film 1 is selected to be 40mm. A pitch L1 of the frame 3, which is the transport pitch of the film 1, is selected to be 42mm. The film 1 having the above-mentioned film format is accommodated in a film cassette 5, as shown in Figures 3 and 4.

The width W1 of the frame 3 of the film 1 is 1.25 times as large as that (24mm) of the frame of existing photographic film. The image quality of the frame 3 in the film-width direction is therefore increased by 25 % over existing film.

If the length L of the frame 3 were increased by the same ratio as the width W1, then the area of the frame 3 would be 1.56 (1.25 x 1.25) times the area of a frame of existing film. Thus, the available image quality could be improved by about 56%.

If the area of the frame 3 of the film 1 were:

$$30mm \times 40mm = 1200mm^2$$

whereas, the area of the frame of the existing film is:

$$24mm \times 36mm = 864mm^2$$

then the area of the frame 3 would be increased by about 39% compared with the area of a frame of existing film, and the available image quality could be increased by about 39% compared with existing film.

Thus, if an image of the same image quality as that of existing photographic film is to be produced, it becomes possible to provide a larger picture or, alternatively, it is possible to use less magnification to provide the same size picture, thereby resulting in a sharper picture.

The overall width W of the film 1 is selected to be the same as that of the existing 35mm wide photographic film so that facilities such as existing photographic film manufacturing apparatus, and apparatus for developing photographic film, can be utilized without any modifications or changes being required. For example, apparatus for slitting wide photo-sensitive film on which photo-sensitive material has been coated, to form photographic film 35mm wide; apparatus for manufacturing a standard 35mm film cassette; and apparatus for winding the film into the cassette can be utilized without modification. Moreover, the existing apparatus for developing, printing and enlarging can be used.

Since the width W1 of the frame 3 is selected to be 30mm, band-shaped non-photographic areas 2A and 2B each having a width of 2.5mm are respectively provided between the edges of the frames 3 and the edges of the film 1, and these areas 2A and 2B make it possible to maintain the flatness of the film 1, to control the film 1, and to read and write data. Moreover, the camera needs no sprockets to transport the film, and can as a result be made compact in size and light in weight.

Figure 2 shows another photographic film 1, in which the width W is again 35mm, and a plurality of small apertures 4 are formed through the film 1 along the non-photographic area 2A. The apertures 4 are used to detect the transport distance of the film 1 as it is advanced. The format is similar to that of the film 1 of Figure 1, namely, the frame 3 has an effective photographic area that is 30mm in width W1 and 40mm in length L. The apertures 4 may each have a diameter of 1mm, and be aligned at approximately 1.25mm from one edge of the film 1, namely on the central line between an edge of the film 1 and the adjacent edge of the frame 3, at a predetermined pitch of, for example, 5.25mm. The apertures 4 may also be arranged in the other non-photographic area 2B. As is described below only one aperture 4 may be provided per frame or the aperture 4 may be replaced with a magnetic mark or the like. The apertures 4 are used, when the film 1 is transported in a camera body, to form the frames 3 at a predetermined pitch of, for example, 42mm. More specifically, when the counted number of the apertures 4 reaches a predetermined value, the transport of the film 1 is stopped.

Referring to Figure 3, a light-tight chamber 12 is located at a central portion of a camera body 11, and a lens system 13 is mounted at the front opening portion of the chamber 12. A film cassette accommodating space 14 is formed at one side portion of the camera body 11, for example, on the left-hand side in Figures 3 and 4, and a spool shaft 15 is aligned with the centre of the space 14. When the photographer loads the camera, a cassette 5 containing the above-described photographic film 1 is set in the space 14, so as to engage with the spool shaft 15.

A film take-up shaft 16 is mounted on the other side of the camera body 11, for example, on the right-hand side in Figures 3 and 4. The shaft 16 is driven to wind the film 1, preferably by a motor (not shown).

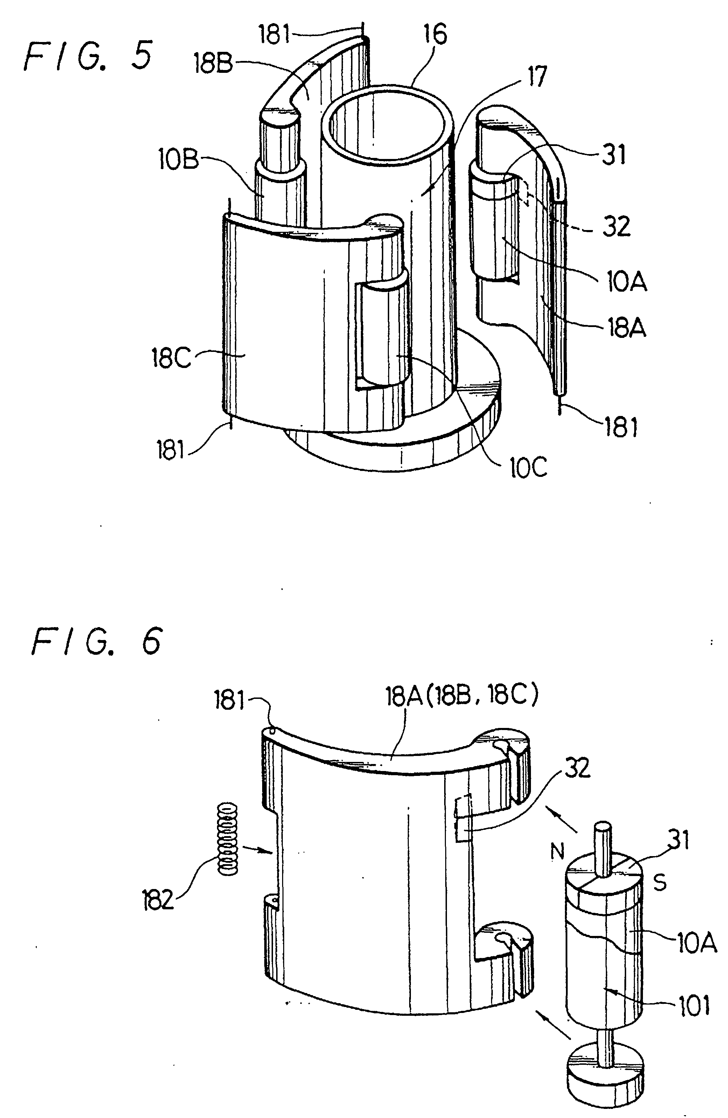

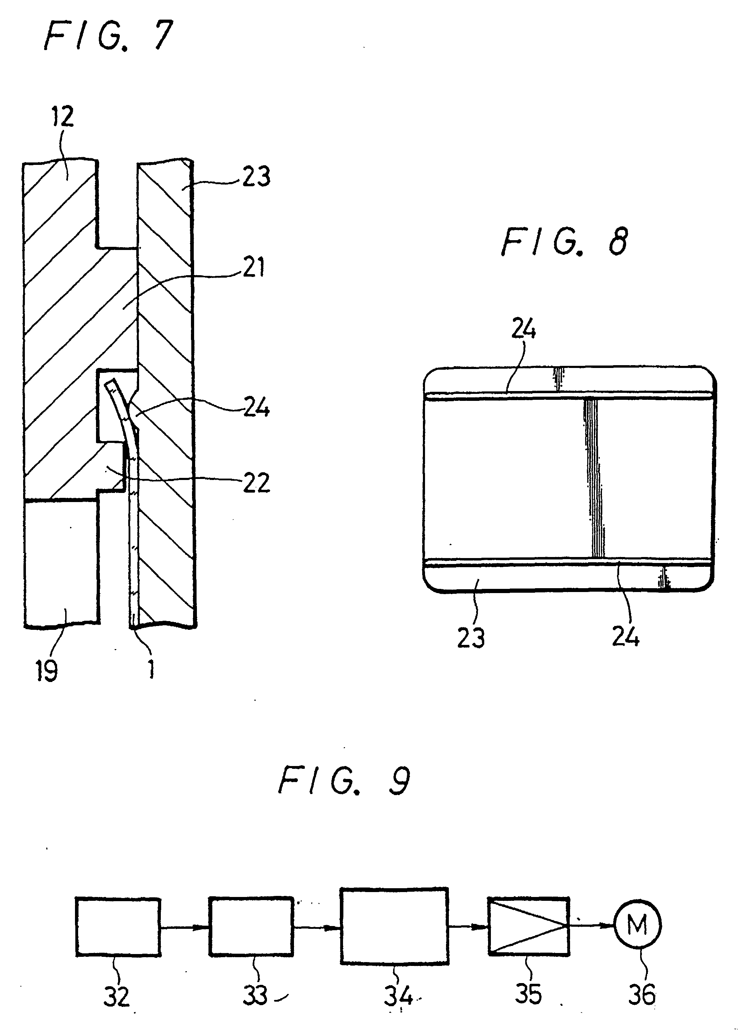

As shown in Figure 5, the peripheral surface of the take-up shaft 16 is coated with a high friction material 17 such as neoprene, and, for example, three film guides 18A to 18C are arranged around the shaft 16. Each of the guides 18A to 18C provides a linear surface parallel to the central axis of the shaft 16 and provides an arcuate surface in the direction perpendicular to the central axis of the shaft 16. As shown in Figure 6, one end portion 181 of each of the film guides 18A to 18C is pivotally supported on the camera body 11, and the other end thereof is spring-biased towards the shaft 16 by a torsion spring 182 located at the pivoted end. Film guide rollers 10A to 10C are rotatably supported in the film guides 18A to 18C at the respective end portions adjacent to the shaft 16, so that they are arranged parallel to the central axis of the shaft 16.

The structure of the film guides 18A, 18B and 18C is shown in more detail in Figure 6, in which the roller 10A of the film guide 18A has a predetermined diameter, and a permanent magnet 31 is secured to one end, for example, the top of the roller 10A. The magnet 31 is magnetized with N and S poles in its radial direction, and the film guide 18A has a magnetic sensor 32, for example, a Hall element, mounted at a position opposing the magnet 31.

Referring back to Figures 3 and 4, it will be seen that through the rear portion of the chamber 12 there is formed a quadrilateral or rectangular aperture 19. The aperture 19 has a length of 30mm (in the width-wise direction of the film 1) to define the frame 3 on the film 1. As will be described, when the photographer takes a picture, the aperture 19 does not come into close contact with the film 1, and the light arriving through the lens system 13 incident on the film 1 is not collimated, so that while the size of the frame 3 is 30mm x 40mm, the size of the aperture 9 is slightly smaller than 30 x 40mm.

As shown in Figure 7, which is an enlarged, cross-sectional view on line 7-7 in Figure 4, two pairs of film guide rails 21 and 22 are respectively formed on the rearwardly facing, inner surface of the chamber 12 along, and at least over the portions corresponding to the top and bottom edges of the aperture 19. The rails 21 are located apart from each other by an inside distance substantially equal to 35mm, so as to define the position of the film 1 in its widthwise direction relative to the aperture 19. The rails 21 are formed parallel with each other and are also made thicker than the inside rails 22 by an amount at least equal to the thickness of the film 1. The rails 22 are respectively formed near the upper and lower edge portions of the aperture 19 and parallel therewith.

A film pressure plate 23 in Figure 8 is attached to the inner or front surface of the rear cover (not shown) of the camera body 11 by some suitable means, such as a pressure spring, for example. A pair of rails 24, each having a predetermined height, are respectively mounted on the front surface of the pressure plate 23 at positions corresponding to the locations between the film guide rails 21 and 22 and parallel to the rails 21. The location of the film 1 is defined by the rails 22 in a widthwise direction, and the rails 24 contact the upper and lower edge portions of the film 1 in the forward direction or left-hand direction of Figure 7, so that the remaining portion of the film 1, that is, the area of the frame 3, is brought into close contact with the pressure plate 23. The rails 24 are not essential in order to provide flat contact between the film 1 and the pressure plate 23.

Accordingly, even although the frame 3 is 30mm long in a widthwise direction, and each of the areas between the edges of the frame 3 and the edges of the film 1 is only 2.5mm wide, the film area corresponding to the frame 3 can be given the necessary flatness by the pressure plate 23.

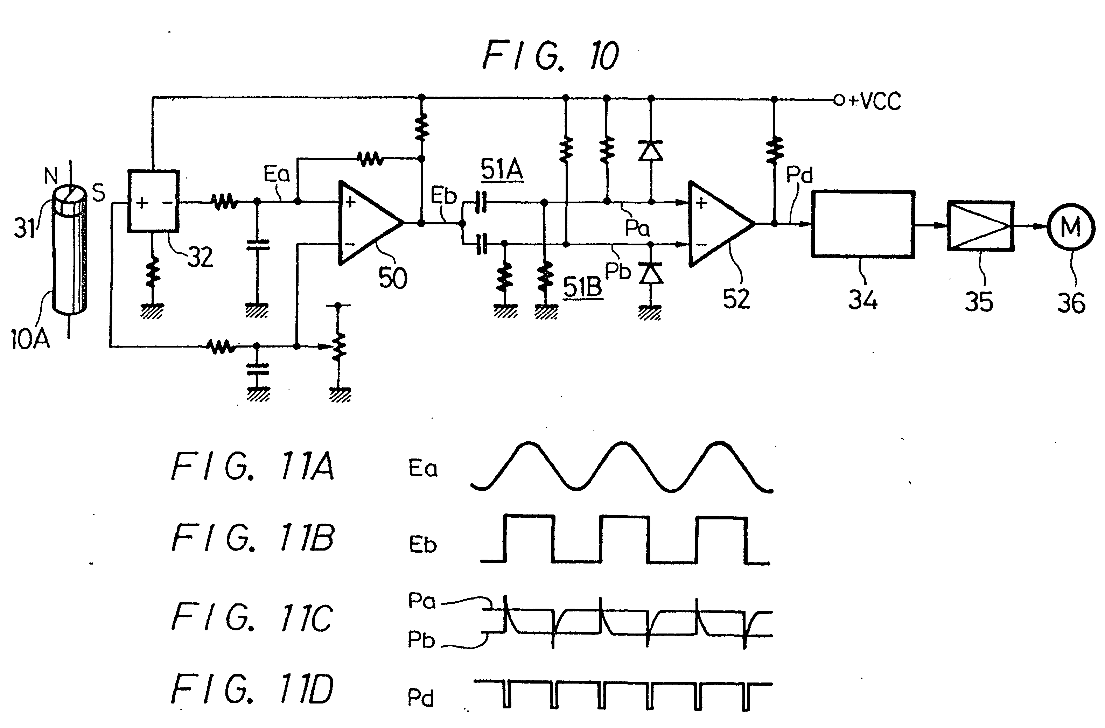

It should be understood that other elements, such as a viewfinder, exposure control, shutter, and the like of the camera can be formed similarly to those of existing photographic cameras. The present camera may however be provided with a film transport amount detecting circuit as shown, for example, in Figures 9 and 10.

When the photographer prepares to take a picture, the cassette 5 is set in the space 14 and the film 1 is withdrawn from the cassette 5 across the aperture 19 to the take-up shaft 16, so that, by means of the film guides 18A to 18C and the film guide rollers 10A to 10C, when the shaft 16 is rotated, the film 1 is wound around the shaft 16. Thus, the film 1 can be transported without requiring film transporting perforations.

When the film 1 is transported, the rollers 10A to 10C and the magnet 31 are rotated in accordance with the movement of the film 1. The rotation of the magnet 31 is detected by the sensor 32, and the detected output is counted by a counter 33, the count from which is supplied to a system controller 34 (formed of a microcomputer), as shown in Figure 9. As is described below, photographic data may be recorded in the non-photographic area between the edge of the photographic film and the frame, and data indicating the type of film may be previously recorded therein. The aperture 4 may be replaced with a magnetic mark or the like and the magnetic sensor 32 may be mounted on the rear cover or on the pressure plate. The system controller 34 is used to control the operation of the entire camera, for example, to determine the aperture and shutter speed. Because the roller 10A of the film guide 18A is rotated one revolution per predetermined transport amount of the film 1, the amount of the film 1 being transported is detected on the basis of the count of the counter 33. Then, the rotation of a drive motor 36, which drives the take-up shaft 16, is controlled through a motor drive amplifier 35, so that the transport corresponds to the count value, to determine the size of the frame 3.

Figure 10 is an example of a detecting circuit that detects the transport amount of the film 1. Assuming that the film transport pitch corresponding to the frame 3 is 42.0mm, then:

$$42.0mm = 5.25mm \times 8$$

That is, the film transport pitch is selected to be equal to an integral multiple of the minimum detectable value of film transport. In other words, the diameter of the roller 10A is determined so that the minimum detection value of the film transport is 5.25mm. Since:

$$5.25mm = \pi \times 3.34mm/2$$

Thus, when the diameter of the detection roller 10A is 3.34mm, the transport amount of the film 1 corresponds to one-half revolution of the roller 10A. As seen from Figure 6, the magnet 31 is formed as a dipole doughnut shape.

The Hall element or magnetic sensor 32 senses the magnet 31 and generates a detected voltage Ea that changes in amplitude in response to revolutions of the magnet 31, as shown in Figure 11A. As shown in Figure 10, the voltage Ea is supplied to a voltage comparing circuit 50, wherein it is waveform-shaped to a square wave voltage Eb, having a period corresponding to the revolutions of the magnet 31, as represented by the waveform Eb in Figure 11B. The voltage Eb is supplied to differentiating circuits 51A and 51B that generate differentiated pulses Pa and Pb which correspond respectively to the trailing and leading edges of the voltage waveform Eb, and are shown in Figure 11C.

The pulses Pa and Pb are supplied to a voltage comparing circuit 52 that generates one pulse Pd at every half period of the voltage Ea, or at every one-half revolution of the magnet 31, and the pulse Pd are shown in Figure 11D. This pulse signal Pd is supplied to the system controller 34.

The system controller 34 controls the operation of the entire camera, as earlier noted. Each time the roller 10A of the film guide 18A rotates by one-half turn, the film 1 is transported a length equal to 5.25mm. Thus, the system controller 34 controls the drive motor 36, so that the number of the pulses Pd equals the count value corresponding to the size of the frame 3. For example, if the pitch is 42mm, the film 1 is transported until eight pulses Pd are obtained and the film 1 is therefore transported at the pitch of one frame 3 corresponding to the above-described format.

In the camera with this structure of the film guidance structure and the film transport detecting circuit, even if the perforations used to transport the photographic film 1 are not present, the film can be transported at the correct frame pitch. Furthermore, the magnet 31 for detecting the transport amount of the film 1 is a dipole magnet, which is cheap.

In the film transport detecting circuit of Figure 10, the leading and trailing edges of the resultant voltage Eb are both counted to detect the amount of the film 1 transported. Thus, even when the magnet 31 is a dipole magnet, the revolution. provided when the detection roller 10A detects the amount of film 1 that is transported can be one-half revolution.

When the diameter of the detection roller 10A is small, slip between the film 1 and the detection roller 10A becomes large, thus resulting in a lowering of detection accuracy. When the diameter of the roller 10A is large, however, the roller 10A needs a large torque to transport the film 1. Thus, unless the motor size is increased, the slip between the film 1 and the roller 10A also becomes large, whereby the detection accuracy is lowered in this case too. Nevertheless, we have found that if the diameter of the roller 10A is 3.34mm as described above, this problem does not occur, and the amount of the film 1 being transported can be correctly detected.

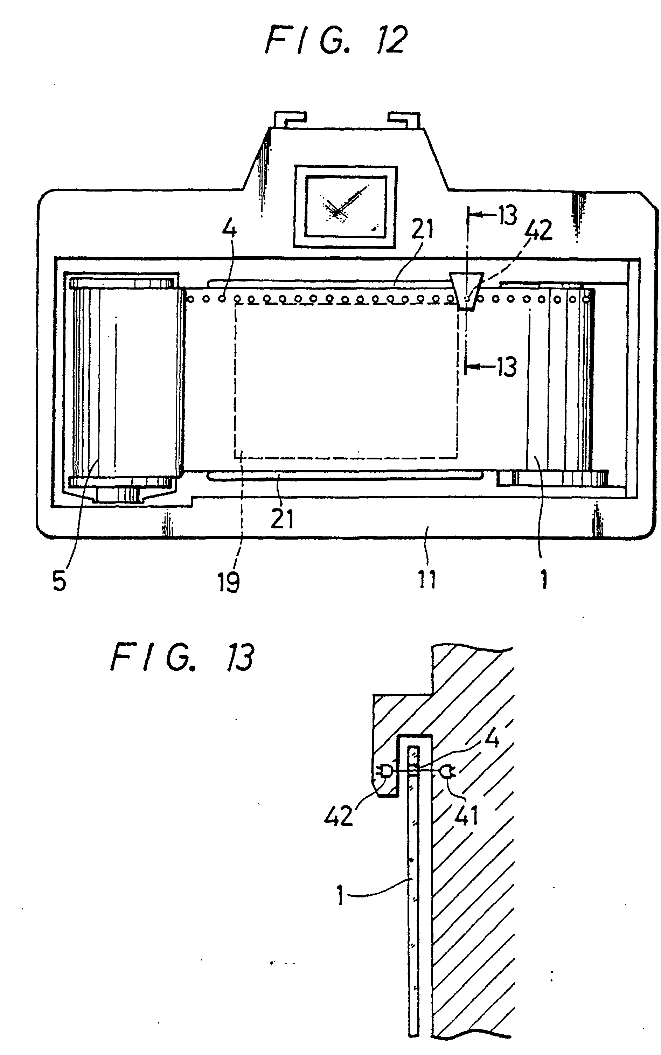

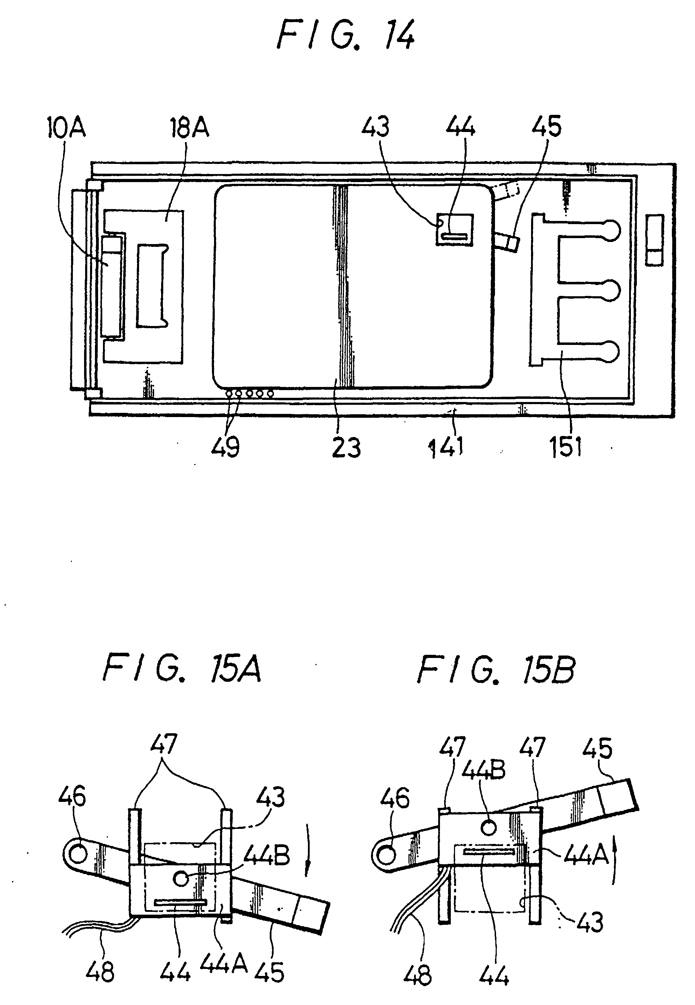

Another example of a detector for detecting the transport of the film 1 will be described with reference to Figures 12 and 13. Figure 12 is a rear view of the camera with the film 1 loaded and the rear cover removed. Figure 13 is an enlarged, cross-sectional view on line 13-13 in Figure 12. In each of Figures 12 and 13, there is employed the film 1 having the format with the plurality of small apertures 4 as shown in Figure 2.

Referring to Figures 12 and 13, a light emitting diode (LED) 41 of the photo-interrupter kind, and a photo-transistor 42 are mounted on the camera body 11 at a position downstream of the film 1 at a location corresponding to the upper edge portion of the aperture 19, so that the LED 41 and the photo-transistor 42 sandwich the apertures 4. The light emission wavelength of the LED 41 and the sensitivity peak of the photo-transistor 42 are selected to be in the infra-red ray wavelength range, for example, 940 nanometres.

In general, because photographic film has a low transmissivity for infra-red rays, as compared with visible light, a level difference between the output from the photo-transistor 42 at an aperture 4 and other portions is enhanced, thereby making it possible positively to detect an aperture 4. Further, the LED 41 emits only infra-red light rays, thereby preventing the film 1 from being fogged.

Thus, when the film 1 is transported, the infra-red light rays emitted from the LED 41 and received at the photo-transistor 42 are interrupted in accordance with the movement of the apertures 4, whereby the photo-transistor 42 generates a detection pulse that indicates the movement of each aperture 4. By supplying this pulse to the counter 33 in the detecting circuit of Figure 9, it is possible to control the transport amount of the film 1 as described above.

Figure 14 shows another example of the film pressure plate 23 attached to the inner surface of the rear cover of the camera body, in which the film pressure plate 23 is attached to the front or inner surface of the rear cover 41 at a location opposing the aperture 19 of Figure 12 in the camera body 11. The pressure plate 23 is larger than the aperture 19, is quadrilateral or rectangular in shape, and does not include the rails that were shown in Figure 8. The pressure plate 23 has formed therein a through-hole 43 at a location corresponding to the corner of a frame of the film 1. Arranged behind the through-hole 43 are six light-emitting element groups 44. As shown in Figures 15A and 15B, these six groups 44 are aligned on a support plate 44A in the lengthwise direction of the film 1. For example, each of these six groups 44 has a squarish B-letter resulting from a seven segment configuration. The light-emitting element groups 44 are pivotally mounted at the centre of a change-over lever 45 by a pin 44B, and one end of the lever 45 is pivotally mounted on a rear cover 141 by a pin 46.

Thus, when the free end of the lever 45 is moved upward and downward around the pin 46 as shown in Figures 15B and 15A, respectively, the light-emitting element groups 44 are moved in the widthwise direction of the film 1. The support plate 44A and, hence, the light-emitting element groups 44, are guided by guide rails 47 so as to move linearly in the widthwise direction of the film 1. The support plate 44A and the light-emitting element groups 44 can be stabilized by a torque spring (not shown) at the end positions shown in Figures 15A and 15B, respectively.

Each of the light-emitting groups 44 is electrically connected through cables 48 and contacts 49 to the system controller 34. The arcuate film guide 18A and the film guide roller 10A are mounted in the rear cover 141. A leaf spring 151 urges the film cassette (not shown) into place in the camera body 11.

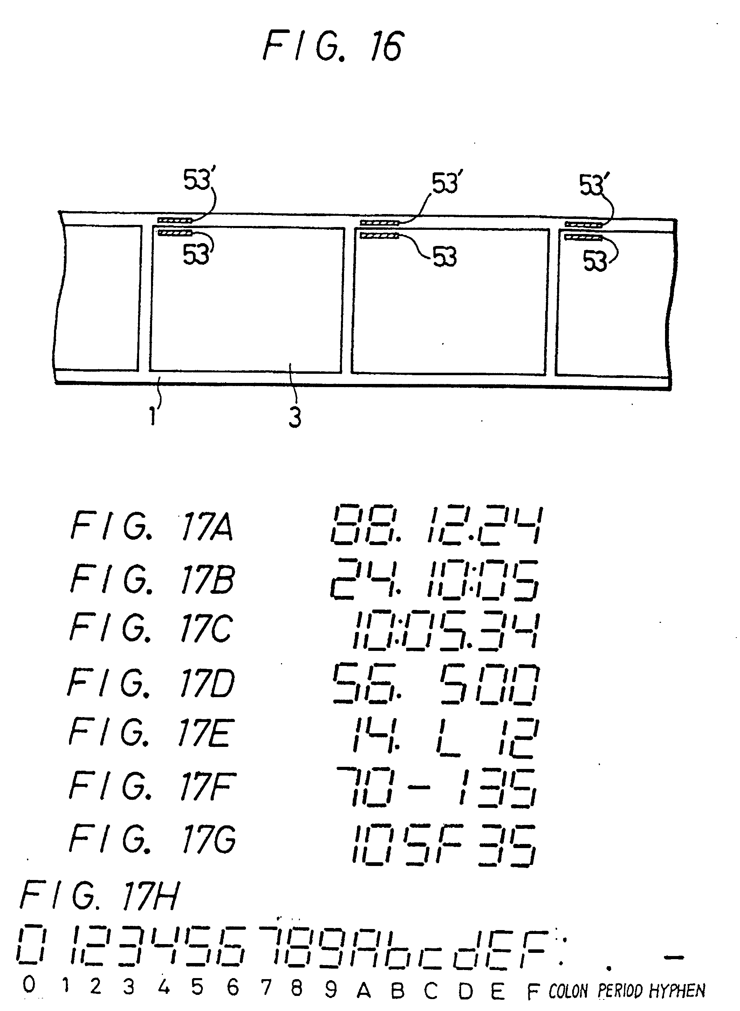

When the photographer takes a picture, if the free end of the lever 45 is lowered as shown in Figure 15A, then the light-emitting element groups 44 are located at a position corresponding to the lower portion of the hole 43, so that data 53 is projected on the area of the frame 3 at a position just along the upper edge thereof, as shown in Figure 16.

If the free end of the lever 45 is moved upward, as shown in Figure 15B, then the light-emitting element groups 44 are located at a position corresponding to the upper portion of the hole 43, so that data 53' is recorded outside the effective area of the frame 3, at a position just along the upper edge thereof, as shown in Figure 16.

Figures 17A to 17G show respective examples of data that can be projected on the film 1 by the six light-emitting element groups 44.

Figure 17A illustrates date data (December 24, 1988); Figure 17B illustrates time and date data (10:05, 24th); and Figure 17C illustrates time data (10:05.34). Figures 17D and 17E illustrate photographic data, for example, aperture 5.6 and shutter speed 1/500 second, and aperture 1.4 and shutter speed long (L), for example, twelve seconds. Figures 17F and 17G illustrate optional data, for example, in which a lens is a zoom lens of 70 to 135mm, and a lens is an f3.5 telephoto lens of 105mm, respectively.

Figure 17H illustrates the font of numerals and characters which can be used as data 53 or 53'. These numerals and characters can be selectively projected inside or outside the frame 3, because the light-emitting element groups 44 are movable by means of the assembly shown in Figures 15A and 15B.

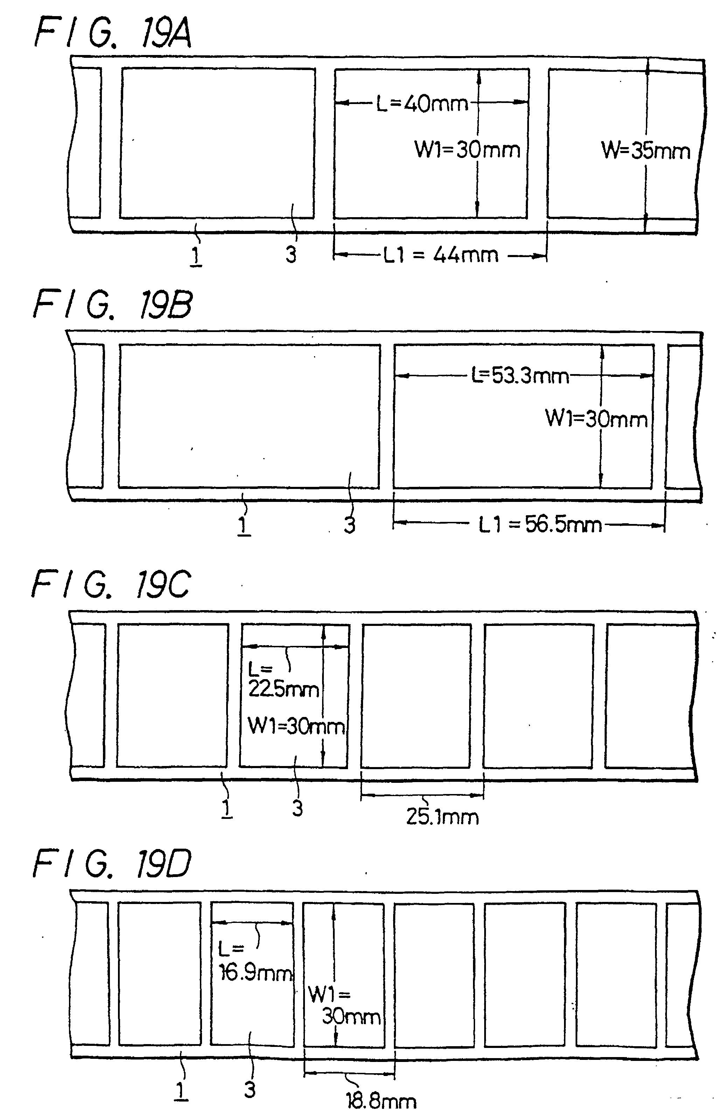

Figures 18A to 18D are diagrams of a photographic format of a film 1 in which the minimum detection value of the film transport amount is selected to be 5.25mm, and Figures 19A to 19D are diagrams of a photographic format of a film 1 in which the minimum detection value of the film transport amount is selected to be 6.28mm. Throughout Figures 18A to 19D, the width W of the film 1 is 35mm, which is equal to the width of existing photographic film, and the film 1 is not provided with perforations.

In the example shown in Figure 18A, a frame 3 defines an effective photographic area (see Figure 1A) whose effective width W1 in the film width direction is 30mm, and whose effective length L in the lengthwise direction of the film 1 is 40mm. A pitch L1 of the frame 3, which is the transport pitch of the film 1, is selected to be 42.0mm. The size and pitch of the frame 3 are selected in accordance with the aspect ratio 3:4 of existing television broadcasting systems.

In the example shown in Figure 18B, the effective width W1 of the effective photographic area or frame 3 is selected to be 30mm, the effective length L is selected to be 53.3mm, and the pitch L1 of the frame 3 is selected to be 57.75mm. These values are selected so as to conform to the standards of a high definition television (HDTV) system (Hi-Vision system). In this case, the aspect ratio of the frame 3 is 9:16.

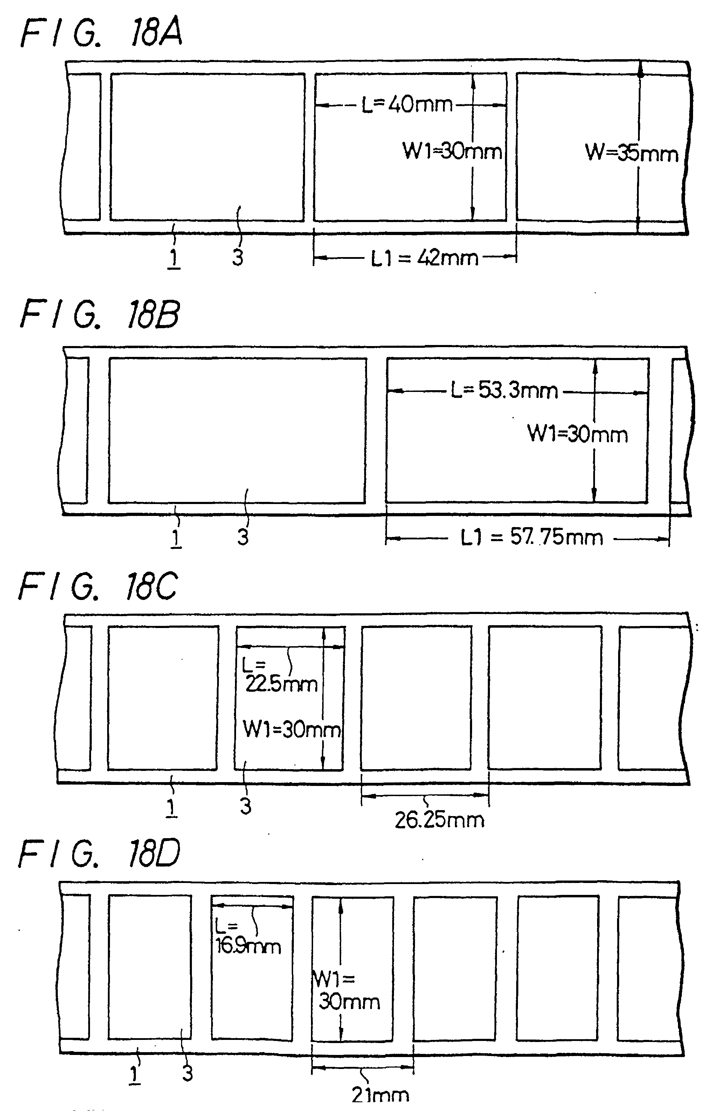

The values in Figures 18A and 18B are present when the photographer takes a full-sized picture. When, on the other hand, a half-sized picture is taken, the size of the frame 3 is changed to 30mm x 22.5mm, and the transport pitch of the film 1 is changed to 26.5mm for the existing television broadcasting system as shown in Figure 18C, while the size of the frame 3 is changed to 30mm x 16.9mm, and the transport pitch of the film 1 is changed to 21.0mm for the HDTV system as shown in Figure 18D. Thus, even when a half-sized picture is taken, the length of the longer side of the frame 3 is approximately 36mm, which provides an image quality substantially equal to that of the full-sized picture of existing film.

Since the minimum detection value of the film transport amount is selected to be 5.25mm as earlier noted, the film transport amount (transport pitch) in the photographic formats of the film 1 in Figures 18A to 18D is selected to be equal to an integral multiple of the minimum detectable value of film transport, that is 5.25mm. Thus, the film transport pitches in Figures 18A to 18D are calculated as:

$$42.00mm = 5.25mm \times 8$$

$$57.75mm = 5.25mm \times 11$$

$$26.25mm = 5.25mm \times 5$$

$$21.0mm = 5.25mm \times 4$$

The diameter of the detection roller 10A for detecting the film transport amount is 3.34mm as described above.

Other examples of the transport pitches of the frame 3 shown in Figures 18A to 18D are represented in Figures 19A to 19D, respectively. In Figures 19A to 19D, the film transport amounts (transport pitches) are each selected to be equal to an integral multiple of the minimum detectable value of film transport, that is, 6.28mm. Thus, the film transport pitches in Figures 19A to 19D are calculated as:

$$44.0mm = 6.28mm \times 7$$

$$56.5mm = 6.28mm \times 9$$

$$25.1mm = 6.28mm \times 4$$

$$18.8mm = 6.28mm \times 3$$

Thus, the diameter of the detection roller 10A for detecting the film transport amount is determined as 4.0mm, and the minimum detection value of the film transport amount is 6.28mm, such that:

$$6.28mm = \pi \times 4.00mm/2$$

The above-mentioned respective values in Figures 19A and 19B correspond to existing television broadcasting systems and the HDTV system, when a photographer takes a full-sized picture, while the respective values in Figures 19C and 19D correspond similarly for a half-sized picture.

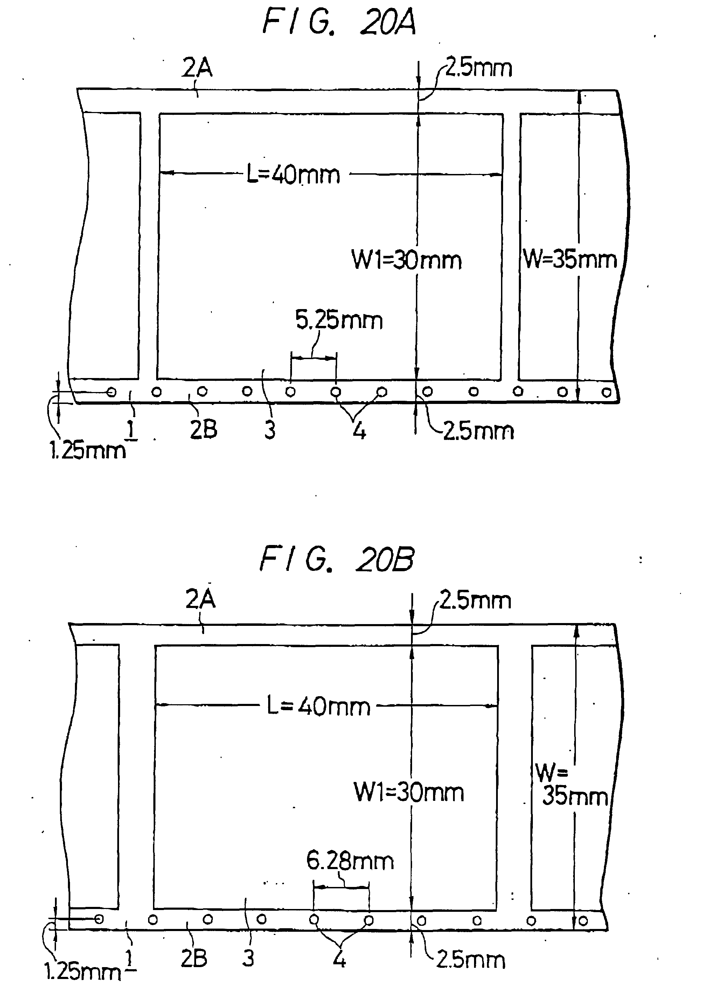

Figures 20A and 20B are further examples of a photographic film 1, in which a plurality of small apertures 4 are formed through the film 1 along the lower non-photographic area 2B. These apertures 4 are used to detect the transport amount of the film 1 shown in Figure 18. The apertures 4 each have a diameter of 1mm, and are aligned from one edge of the film 1 by approximately 1.25mm, namely, on the central line between the edge of the film 1 and the edge of the frame 3 at a predetermined pitch, for example, 5.25mm as shown in Figure 20A. Similarly, for the format of the film 1 shown in Figure 19, the apertures 4 are aligned at a pitch of 6.28mm as shown in Figure 20B.

Since the pitch of the apertures 4 is selected to be 5.25mm or 6.28mm on the basis of the above-mentioned background, the format of the film 1 can be suitably applied to an existing television broadcasting system and to the HDTV system, but also it can be applied to both of the full-sized picture and the half-sized picture.

More specifically, when the film 1 is transported in the camera body 11, the number of apertures 4 is counted by the photo-interrupter utilizing infra-red rays. When the count reaches a predetermined value, the transport of the film 1 is stopped, so that the frames 3 are automatically formed on the film 1 at a correct pitch.

In the examples shown in Figures 20A and 20B, the apertures 4 are aligned on the lower non-photographic area 2B, whereas the apertures 4 are aligned on the upper non-photographic area 2A in Figure 2. The reason for this is that the location of the aperture 4 is determined in response to the location of the photo-interrupter, and the means for recording information on the film 1.

Throughout Figures 18A to 18D, 19A to 19D and 20A to 20B, the photographic area exposed to light differs from that explained in connection with Figures 3 and 4. This can be achieved by properly matching the size of the rectangular aperture 19 and the lens system 13 (Figures 3 and 4). Moreover, when the apertures 4 are aligned on the opposite side or lower side, they may be located in accordance with the location of the photo-interrupter.

The photographic film 1 may be either a positive or a negative, photographic film.

Moreover, photograph data may be recorded in the non-effective photographic area between the edge of the photographic film and the frame, and data indicating the type of the photographic film 1 may be previously recorded therein. Also, only one small aperture 4 may be provided per frame, or the small aperture 4 may be replaced with a magnetic mark or the like, and the magnetic sensor and the photo-transistor may be mounted on the rear cover or on the pressure plate.

## Claims

1. A photographic camera using a photographic film (1) contained in a cassette (5) and being devoid of a sprocket hole; the photographic camera comprising:

   a camera body having a first space (14) formed therein to accommodate the cassette (5), and a second space formed therein to accommodate the film (1) supplied from the cassette (5), and an aperture (19) formed in said camera body, said aperture defining a frame on a photographic area of the film having an aspect ratio of lengthwise in the film transporting direction and crosswise in film width direction of 16:9 transporting means (16, 26) provided in the camera body (11) for transporting the film (1) between the first space (14) and the second space;
   guide means (21) provided in the camera body (11) to define the position of the film (1) between the first space (14) and the second space;
   detecting means provided in the camera body (11) for detecting small apertures (4) included on an edge side (2A; 2B) of the film (1) which indicate in use a length of said photographic areas in the film transporting direction, and for generating a detected signal to control said transporting means;
   exposing means provided in the camera body (11) to expose an image of an object to be picked up on the photographic area of the film through said aperture to provide said 16:9 aspect ratio; and
   control means provided in the camera body (11) for controlling the film transporting amount of the film according to the detected signal in such a manner that the object is exposed on said photographic area to provide in combination with said aperture said frame having the 16:9 aspect ratio

wherein said guide means (21, 22, 24) includes a first pair of guide rails (21) positioned respectively on said camera body to define the location of the film in the widthwise direction, a second pair of guide rails (22) positioned on said camera body within said first pair of guide rails (21), each rail of said second pair (22) being positioned respectively between one of said first pair of rails and an edge of said aperture (19), **characterised by**

a third pair of guide rails (24) disposed on a rear cover, each rail (24) of said third pair being positioned respectively when said rear cover is in a closed position between one rail of said first pair of guide rails (21) and one rail of said second pair of guide rails (22) to the effect that in use said third guide rails contact the upper and lower edge positions (2A; 2B) of the film (1) respectively, to guide the film in said film transporting direction with respect to said aperture (19).

## Patentansprüche

1. Photokamera, die einen Photofilm (1) verwendet, der in einer Kassette (5) aufgenommen ist und kein Führungsloch aufweist; wobei die Photokamera umfasst:

   - einen Kamerakörper, der einen ersten darin gebildeten Raum (14), zur Aufnahme der Kassette (5) und einen zweiten darin gebildeten Raum zur Aufnahme des Films (1), der von der Kassette (5) zugeführt wird, und eine Öffnung (19), die in dem Kamerakörper gebildet ist, aufweist, wobei die Öffnung ein Bild auf einem Aufnahmebereich des Films definiert, wobei das Bild ein Bildkantenverhältnis von längs in Filmtransportrichtung zu quer in der Filmbreitenrichtung von 16:9 aufweist.
   - Transportmittel (16, 26), die in dem Kamerakörper (11) vorgesehen sind, um den Film (1) zwischen dem ersten Raum (14) und dem zweiten Raum zu transportieren;
   - Führungsmittel (21), die in dem Kamerakörper (11) vorgesehen sind, um die Position des Films (1) zwischen dem ersten Raum (14) und dem zweiten Raum zu bestimmen;
   - Erkennungsmittel, die in dem Kamerakörper (11) vorgesehen sind, zum Erkennen kleiner Öffnungen (4), die an einer Randseite (2A, 2B) des Films (1) eingeschlossen sind, wobei diese im Gebrauch eine Länge der Aufnahmebereiche in der Filmtransportrichtung anzeigen, und zur Erzeugung eines Erkennungssignals zur Steuerung der Transportmittel;
   - Belichtungsmittel, die in dem Kamerakörper (11) vorgesehen sind, um eine Abbildung eines Gegenstandes, der auf dem Photoaufnahmebereich des Films aufgenommen werden soll, durch die Öffnung zu belichten, um das 16:9 Bildkantenverhältnis zu liefern; und
   - Steuermittel, die in dem Kamerakörper (11) vorgesehen sind, um die Filmtransportstrecke des Films entsprechend dem Erkennungssignal in einer solchen Weise zu steuern, dass der Gegenstand auf den Photoaufnahmebereich belichtet wird, um in Kombination mit der Öffnung das Bild mit dem 16:9 Bildkantenverhältnis zu schaffen;
   - wobei die Führungsmittel (21, 22, 24) ein erstes Paar Führungsschienen (21) einschließt, die jeweils an dem Kamerakörper positioniert sind, um die Position des Films in der Breitenrichtung zu definieren, ein zweites Paar Führungsschienen (22), das an dem Kamerakörper innerhalb des ersten Paares Führungsschienen (21) positioniert ist, wobei jede Schiene des zweiten Paares (22) jeweils zwischen einer der Schienen des ersten Paares von Schienen und einer Kante der Öffnung (19) positioniert ist, **dadurch gekennzeichnet, dass**

ein drittes Paar Führungsschienen (24) an einer rückseitigen Abdeckung angebracht ist, wobei jede Schiene (24) des dritten Paares, wenn die rückseitige Abdeckung sich in einer geschlossenen Position befindet, zwischen einer Schiene des ersten Paares Führungsschienen (21) und einer Schiene des zweiten Paares Führungsschienen (22) positioniert ist, mit dem Effekt, dass im Gebrauch die dritten Führungsschienen die oberen bzw. unteren Randpositionen (2A, 2B) des Films (1) kontaktieren, um den Film in der Filmtransportrichtung bezüglich der Öffnung (19) zu führen.

## Revendications

1. Appareil photographique utilisant un film photographique (1) contenu dans une cassette (5) et qui est exempt de trou d'entraînement, l'appareil photographique comportant :

   un corps d'appareil ayant un premier espace (14) formé dedans afin d'accepter la cassette (5), et un deuxième espace formé dedans afin d'accepter le film (1) délivré depuis la cassette (5), et une ouverture (19) formée dans ledit corps d'appareil, ladite ouverture définissant une vue sur une zone photographique du film ayant un format d'image dans le sens de la longueur dans la direction de déplacement du film et transversalement au sens de la largeur du film de 16 : 9;

des moyens de transport (16, 26) prévus dans le corps d'appareil (11) afin de transporter le film (1) entre le premier espace (14) et le deuxième espace;

des moyens de guidage (21) prévus dans le corps d'appareil (11) afin de définir la position du film (1) entre le premier espace (14) et le deuxième espace;

des moyens de détection prévus dans le corps d'appareil (11) afin de détecter des petites ouvertures (4) incluses sur un bord latéral (2A; 2B) du film (1), qui indiquent lors de l'utilisation une longueur desdites zones photographiques dans la direction de transport de film, et destinés à générer un signal détecté afin de commander lesdits moyens de transport;

des moyens d'exposition prévus dans le corps d'appareil (11) afin d'exposer une image d'un objet devant être capté sur la zone photographique du film à travers ladite ouverture de façon à procurer ledit format d'image de 16 : 9; et

des moyens de commande prévus dans le corps d'appareil (11) afin de commander la valeur de transport de film du film en fonction du signal détecté d'une manière telle que l'objet est exposé sur ladite zone photographique de façon à procurer en combinaison avec ladite ouverture ladite vue ayant le format d'image de 16 : 9;

lesdits moyens de guidage (21, 22, 24) comprenant une première paire de rails de guidage (21) positionnés de manière respective sur ledit corps d'appareil afin de définir l'emplacement du film dans le sens de la largeur, une deuxième paire de rails de guidage (22) positionnés sur ledit corps d'appareil à l'intérieur de ladite première paire de rails de guidage (21), chaque rail de ladite deuxième paire (22) étant positionné de manière respective entre un rail de ladite première paire de rails et un bord de ladite ouverture (19), **caractérisé par**

une troisième paire de rails de guidage (24) disposée sur un capot arrière, chaque rail (24) de ladite troisième paire étant positionné de manière respective lorsque ledit capot arrière est dans une position fermée entre un rail de ladite première paire de rails de guidage (21) et un rail de ladite deuxième paire de rails de guidage (22) avec pour effet que, lors de l'utilisation, lesdits troisièmes rails de guidage viennent en contact avec les positions de bord supérieur et inférieur (2A; 2B) du film (1) de manière respective, de façon à guider le film dans ladite direction de transport de film par rapport à ladite ouverture (19).

## F I G. 1

2.5mm   2A

L=40mm
W1=30mm   W=35mm

1   2B   3

L1=42mm

2.5mm

## F I G. 2

1.25mm   2A   5.25mm   4   2.5mm

L=40mm

W1=30mm   W=35mm

1   2B   3   2.5mm

L2=42mm

# FIG. 3

# FIG. 4

FIG. 5

FIG. 6

FIG. 7

FIG. 8

FIG. 9

FIG. 10

+VCC

36
35
34
52
51A
51B
50
32
31
10A

Ea
Eb
Pa
Pb
Pd

N
S

FIG. 11A
FIG. 11B
FIG. 11C
FIG. 11D

Ea
Eb
Pa
Pb
Pd

# F I G. 12

# F I G. 13

# F I G. 14

# F I G. 15A

# F I G. 15B

# FIG. 16

FIG. 17A     88. 12.24

FIG. 17B     24. 10:05

FIG. 17C     10:05.34

FIG. 17D     56. 500

FIG. 17E     14. L 12

FIG. 17F     70 - 135

FIG. 17G     105F 35

FIG. 17H

0 1 2 3 4 5 6 7 8 9 A b c d E F :  .  —

0 1 2 3 4 5 6 7 8 9 A B C D E F COLON PERIOD HYPHEN

FIG. 18A

FIG. 18B

FIG. 18C

FIG. 18D

## F I G. 19A

L=40mm

W1=30mm

W=35mm

1

3

L1 = 44mm

## F I G. 19B

L=53.3mm

W1=30mm

1

3

L1 = 56.5mm

## F I G. 19C

L=
22.5mm

W1=30mm

1

3

25.1mm

## F I G. 19D

L=
16.9mm

W1=
30mm

1

3

18.8mm

## F I G. 20A

2A

2.5mm

L=40mm

W1=30mm

W=35mm

5.25mm

1.25mm  1  2B  3  4  2.5mm

## F I G. 20B

2A

2.5mm

L=40mm

W1=30mm

W=35mm

6.28mm

1.25mm  1  2B  3  4  2.5mm